# EUROPEAN PATENT APPLICATION

(11) **EP 4 781 816 A1**
(43) Date of publication of application: **29.07.2026**
(21) Application number: 25154422.7
(22) Date of filing: 28.01.2025
(51) Int. Cl.: A01G 18/20, A01G 24/20, A01G 24/23, A01G 24/25, A01G 13/35

(54) **MULCH COMPOSITION**

(71) Applicant: Koos Buitenhuis Boomkwekerij B.V., 2771 HA Boskoop (NL)
(72) Inventor: Buitenhuis, Hendrik Johannes, 2771 HA Boskoop (NL)
(74) Representative: Patent Business B.V.

(57) **Abstract**

The present invention is in the field of mulch compositions, their preparation, and uses.

## Description

### FIELD OF THE INVENTION

The present invention is in the field of mulch compositions, their preparation, and uses.

### BACKGROUND OF THE INVENTION

In their battle against weed growth, gardeners and horticulturists often apply a mulch onto the soil. A mulch is a layer of a material which covers the surface of soil, thus suppressing weed growth and enhancing the visual appeal of the garden. Other reasons for applying a mulch can be conservation of soil moisture or improving fertility and health of the soil.

Many materials are used as mulches. Mulch is often organic in nature, but it can also be made from *int. al.* rubber, plastic, rock or gravel. The present invention is in the field of organic mulches. Examples of well-known organic mulches are wood chips, bark chips, and cocoa hulls.

A disadvantage of organic mulches is that, overtime, they tend to be (partially) blown away by the wind, and/or flushed out by rainfall.

To overcome this disadvantage, different types of mulch glues have been developed. More specifically, mulch glue is intended to bind the mulch pieces together, helping them to stay in place even during strong winds or heavy rains. Mulch glues currently on the market in the some countries include modified acrylic polymers or latex-based adhesives. These mulch glues are typically mixed with water and subsequently sprayed onto a mulch layer covering the soil. Disadvantages of these glues are that application is a lot of work (the mulch typically need to be treated 2-4 times to reach sufficient effectiveness), and that such compounds may adversely affect drainage and/or be harmful to plants and animals.

EP 4 144 819 A1 relates to a mulch composition having a total porosity of 88 volume % or more, characterized in that it comprises: about 5 to 95 % of fibers of tree bark, based on the total weight of the mulch composition, and about 5 to 95% of fibers of wood components, based on the total weight of the mulch composition, and at least one binder and/or dye; wherein the size of the fibers in the mulch composition ranges at least from 0,149 mm to 2,38 mm; wherein 62.3 weight% to 79.5 weight% of the fibrous tree bark and the fibrous wood components have a particle size less than 2,38 mm and greater than 0,149 mm. Said binder is disclosed to be chosen amount (I) synthetic binders and particularly styrene-butadiene polymers, styrene-acrylate polymers, polyvinylacetate polymers, polyvinylacetate-ethylene (EVA) polymers, polyvinylalcohol polymers, polyacrylate polymers, polyacrylic acid copolymers, powdered polyethylene and polypropylene, thermoset binders like resole and novolac-type resins which are phenol/formaldehyde condensates, melamine/formaldehyde condensates, urea/formaldehyde condensates, and (II) natural binders and particularly starches such as corn starch, modified celluloses such as hydroxyalkyl celluloses and carboxyalkyl cellulose, or naturally occurring gums such as guar gum, gum tragacanth, natural and synthetic waxes.

A disadvantage of the mulch compositions described in EP 4 144 819 A1 is, however, that the desired effects (i.e. resist being blown away by the wind, and/or flushed out by rainfall) are insufficient, especially after a few weeks or months. Another problem associated with the combination of for example bark or wood chips with such natural binders is that the bark and wood chips need to be carefully dried before being mixed with the binder as otherwise the parts will stick together during storage, so that the product cannot be easily applied onto the soil. Said drying process makes such compositions expensive.
There is therefore a need for an improved mulch composition.

The present invention relates to a specific type of mulch and further aspects thereof, which overcomes one or more of the above disadvantages, without jeopardizing functionality and advantages.

### SUMMARY OF THE INVENTION

In a first aspect, the invention relates to a mulch composition comprising:
- at least 50 wt% of a fibrous material selected from the group consisting of parts of ornamental grass; shredded bark; wood chips; cocoa hulls; pumice stone; and mixtures thereof;
   and
- between 10 and 50 wt% of a binder, in particular more than 20 wt% and less than 50wt%,
the binder being animal manure, in particular a thick fraction of animal manure,
with weight percentages being based on the total weight of the mulch composition.

Surprisingly, it was found that by adding between 10 and 50 wt%, in particular more than 20 wt% and less than 50 wt% of the binder of the present invention to the specific fibrous material, the resulting mulch composition can resist being blown about in windy conditions or floating away in heavy rains much better than without addition of the binder. What is more, it was found that the mulch composition of the invention is easy to handle, even after being stored for weeks or months.

The term "mulch" as used herein denotes a composition comprising a fibrous material which, when applied to a soil in a layer of between 0.5 and 25 cm, suppresses weed growth, and furthermore improves water retention, protects soil against heat, protects soil against frost, and/or protects soil against drought, while being permeable to air and water.

The term "ornamental grass" denotes any ornamental grass suitable for use as mulch material, and is in particular an ornamental grass of the Poaceae family, and more in particular an ornamental grass selected from the group consisting of switch grass (*Panicum virgatum*) and *Miscanthus* species.

As a skilled person will understand, the term "wood chips" covers all wood parts known to be suitable for use as mulch, such as wood fibers, wood shavings, arborist chips, shredded wood, and modified wood chips.

The term "shredded bark" is meant to denote pieces of all types of bark parts known to be suitable for use as mulch.

The term "cocoa hulls" denotes the chopped hulls or shells of cocoa beans.

The term "binder" as used herein denotes a component which, when added to a fibrous material, improves the resistance of the fibrous material against weather conditions such as being blown away by wind and/or floating away with rain. In particular, the binder holds the material together.

The binder of the invention is animal manure, in particular a thick fraction of animal manure. Currently, urine and faeces from indoor livestock are usually combined as slurry (also often denoted as "animal manure slurry". Said slurry is subsequently subjected to a manure separation process. The term "manure separation process" as used herein refers to known processes or methods wherein manure is processed, in particular wherein a solid manure fraction is separated from a liquid manure fraction. The thick fraction suitable for use in the composition according to the invention can be obtained using a solid-liquid separation of an animal manure slurry as described by M. Hjorth et al. in Agron. Sustain. Dev. 30 (2010), 153-180. Hereinafter said solid manure fraction is referred to as "thick fraction of animal manure". Typically, said solid manure fraction, i.e. the thick fraction, has a dry matter content of at least 30% by weight, preferably of at least 60% by weight, while the liquid fraction may have a dry matter content of about 3 to 6%.

In another aspect, the invention relates to a process for the preparation of a mulch composition according to the invention.

Further, the invention relates to a process for suppressing weed growth.

The invention furthermore relates to the use of the mulch composition of the invention for suppressing weed growth, preventing plant diseases, inhibiting growth of parasitic fungi, protection against insects and/or improving soil conditions.

Finally, the invention relates to the use of animal manure, in particular a thick fraction of animal manure as a binder for fibrous material, suitable for the use as mulch, wherein the fibrous material is selected from the group consisting of parts of ornamental grass; shredded bark; wood chips; cocoa hulls; and mixtures thereof.

Thereby the present invention provides a solution to one or more of the above-mentioned problems. Advantages of the present invention are detailed throughout the description.

### DETAILED DESCRIPTION OF THE INVENTION

The present invention relates in a first aspect to a mulch composition comprising:
- at least 50 wt% of a fibrous material selected from the group consisting of parts of ornamental grass; shredded bark; wood chips; cocoa hulls; pumice stone; and mixtures thereof;
   and
- between 10 and 50 wt% of a binder, in particular more than 20 wt% and less than 50 wt%,
the binder being animal manure, in particular a thick fraction of animal manure,
with weight percentages being based on the total weight of the mulch composition.

Preferably, the solid manure fraction, i.e. the thick fraction, has a dry matter content of between 30 and 75% by weight, more preferably between 50 and 70 % by weight, based on the total weight of said thick fraction.

The mulch composition according to the invention preferably comprises between 55 and less than 80 wt% of said fibrous material. In a more preferable embodiment, the mulch composition comprises between 55 and 79 wt% of said fibrous material. Most preferably, the mulch composition comprises between 60 and 78 wt% of said fibrous material. More fibrous material improves water and moisture transmission and regulation.

In the mulch composition of the invention, the binder is more preferably present in an amount of between 21 and 45 wt%, most preferably in an amount of between 22 and 40 wt%, with the weight percentages being based on the total weight of the mulch composition.

The fibrous material of the invention is selected from the group consisting of parts of ornamental grass; shredded bark; wood chips; cocoa hulls; pumice stone; and mixtures thereof.

The fibrous material is preferably selected from the group consisting of ornamental grass, shredded bark, and wood chips. Most preferably, however, the fibrous material is an ornamental grass. In an embodiment, the ornamental grass is cut to an average length of 0.5-4.5 cm.

In an exemplary embodiment of the present invention, the fibrous material comprises shredded bark. An advantage of the present invention is that the shredded bark does not have to be dried before it is mixed with the binder. The problems associated with known combinations of bark and natural binders like starch etc. do not occur. On the contrary, the composition of the invention comprising shredded bark and binder can be stored for at least 2, in particular more than 4 months, while still being readily processable.

In an exemplary embodiment of the present invention the fibrous material comprises parts of ornamental grass, in particular chopped stems and leaves of said ornamental grass. The ornamental grass has specific advantages compared to other fibrous material used as mulch. Parts of the ornamental grass become over time naturally entangled with each other. As a result, a layer of ornamental grass parts remains of higher quality, even when the binder has (partially) been digested, than other types of fibrous materials used as mulch such as bark, wood chips, or cocoa hulls.

The ornamental grass is in particular an ornamental grass of the Poaceae family, and more in particular an ornamental grass selected from the group consisting of switch grass (*Panicum virgatum*) and *Miscanthus* species.

In the event that parts of a *Miscanthus* species is used as fibrous material, it is preferably a *Miscanthus* species selected from the group consisting of *Miscanthus sinensis, Miscanthus giganteus, Miscanthus sacchariflorus, Miscanthus tinctorius, Miscanthus transmorrisonensis.*

In an embodiment of the invention, at least 50% of the applied fibrous material parts have a particle size falling within the range of 5 - 45 mm, preferably 7 - 30 mm (with the percentage being weight percentage calculated on total weight of the fibrous material).

The mulch composition of the invention may further comprise an iron salt, in particular iron oxide and/or iron sulphate. Said iron salt is preferably used in a total amount of between 0.1 and 5 wt% of iron salt, most preferably in an amount of between 0.5 and 3.5 wt%, with weight percentages being based on the total weight of the mulch composition. An advantage of using a composition according to the invention comprising an iron salt, and in particular iron oxide and/or iron sulphate, is that undesired growth of moss is suppressed even more.

Animal waste can be a source of a variety of pathogens, which is a potential hazard for the human health. Therefore, in an exemplary embodiment of the invention the binder is a sanitized thick fraction of animal manure. More particularly, preferably a thick fraction of animal manure is used which has been subjected to a pathogens reducing heat treatment. A well-known sanitization process includes subjecting the thick fraction of animal manure to a temperature of at least 70°C for at least 60 minutes (see also the European Animal By-products regulation (Regulation (EC) No 1069/2009) and its implementing regulation (Regulation (EU) No 142/2011)). As the skilled person will understand, sanitization can also be achieved using other known and comparable techniques such as chemical treatment or to a comparable (heat) treatment (also including radiation treatment, UV treatment, etc).

As mentioned above, typically, the thick fraction has a dry matter content of at least 60% by weight, preferably of at least 70% by weight, while the liquid fraction may have a dry matter content of about 3 to 6%.

The animal manure which is used for preparing the binder of the invention is preferably animal manure is selected from the group consisting of cattle manure, pig manure, horse manure, goat manure, sheep manure, and chicken manure. Preferably, however, the animal manure is cattle manure, in particular manure from cows, as such manure is abundant and relatively cheap.

In another aspect, the invention relates to a process for the preparation of a mulch composition comprising
(a) providing a fibrous material selected from the group consisting of parts of ornamental grass; bark chips; wood chips; cocoa hulls; pumice stone; and mixtures thereof;
(b) providing a binder, said binder being animal manure, more particularly, a thick fraction of animal manure;
   and
(c) mixing the fibrous material and the binder in such an amount that the resulting mulch composition comprises at least 50 wt% of the fibrous material and between 10 and 50 wt% of the binder.

The process according to the invention can be performed using standard equipment used in the field.

In an exemplary embodiment of the invention, in step (c), the fibrous material and binder are mixed in such an amount that the resulting mulch comprises between 55 and 90 wt% of said fibrous material and between 10 and 45 wt% of said binder, more preferably between 55 and 79 wt% of said fibrous material and between 21 and 40 wt% of binder, and most preferably between 60 and 78 wt% of said fibrous material and between 22 and 40 wt% of said binder, with the weight percentages being based on the total weight of the mulch composition.

In an embodiment, the mulch composition comprises an iron salt. In an embodiment iron (III) oxide (FeO₃) and/or iron (II) sulphate (Fe(II)SO₄). These salts may be added during step (a), step (b), step (c), and/or in a subsequent step (d). The iron oxide can be added as such or in the form of an aqueous solution.

The binder is preferably a sanitized thick fraction of animal manure. Preferably, the binder is a thick fraction of animal manure which has been subjected to a pathogen reducing (heat) treatment, more preferably wherein the thick fraction of animal manure has been subjected to a temperature of at least 70°C for at least 60 minutes, or to a similar treatment as discussed above.

In a further aspect, the invention relates to a process for suppressing weed growth, comprising applying a layer of a mulch composition according to the invention onto soil. Typically, the composition is applied as a layer with a thickness of 0.5-25 cm, in particular 1-20 cm, more in particular 2 - 15 cm.

In yet another aspect, the invention relates to the use of the mulch composition according to invention for at least one of suppressing weed growth, preventing plant diseases, inhibiting growth of parasitic fungi, protecting against heat, protecting against drought, protecting against frost, protecting against insects and/or improving soil conditions by applying a layer thereof on soil. The mulch can be applied to soil in a garden, a park, an orchard, a field, a nursery, a market garden, a farm, an orangery, on soil around a plant, bush, or tree; or on soil surrounding a plant, bush, or tree in a pot or container.

In yet another aspect, the invention relates to the use of animal manure. In particular, a thick fraction of animal manure is used. More in particular, a sanitized thick fraction of animal manure, as a binder for fibrous material suitable for use as mulch, is used, wherein the fibrous material is selected from the group consisting of parts of ornamental grass; shredded bark; wood chips; cocoa hulls; pumice stone; and mixtures thereof.

The invention is further detailed by the accompanying examples, which are exemplary and explanatory of nature and are not limiting the scope of the invention. To the person skilled in the art it may be clear that many variants, being obvious or not, may be conceivable falling within the scope of protection, defined by the present claims.

### EXAMPLES/EXPERIMENTS

The invention although described in detailed explanatory context may be best understood in conjunction with the accompanying examples.

### Description of the figures:

Figure 1(a)-(d) show photos of containers with soil covered by a layer of approximately 2.5 cm of a mulch composition, with the mulch composition comprising in
   Fig. 1(a): miscanthus only.
   Fig 1(b): miscanthus and the binder of the invention
   Fig 1(c): a mixture of miscanthus and bark chips and the binder of the invention
   Fig 1(d): bark chips and the binder of the invention
Figure 2(a)-(d) show photos of the samples of Figures 1(a)-(d), wherein the containers are held upside down to test the performance of the mulch compositions.
Figures 3(a)-(b) show photos of an exemplary container with conifer comprising a miscanthus mulch composition of the invention, 6 months after applying said mulch mixture onto the soil (Fig. 3(a)) and the same container upside (Fig. 3(b)).

### Material and methods

### Binder:

A slurry of cows manure (comprising urine and faeces) was subjected to a manure separation treatment. More particularly, the slurry was subjected to a sedimentation treatment in a thickener. Said thickener consisted of a container which was cylindrical at the top and conical at the bottom. The slurry was added to the top of the thickener and the solids settled at the bottom of the conical part from whence the solids (i.e. the thick fraction) was isolated (see also M. Hjorth et al. in Agron. Sustain. Dev. 30 (2010), 153-180). The thick fraction was subsequently subjected to a heat treatment by heating it to a temperature of 70°C for 60 minutes in an oven. The resulting product had a dry matter content of 50%.

### Miscanthus:

Miscanthus was obtained from Novabiom. It consisted of dried and chopped stems and leaves of *Miscanthus Giganthus.*

### Bark chips:

Bark chips were obtained from Culvita (Culvita French Bark). It consisted of chopped bark with a size of 8-15 mm.

### Container:

For the experiments standard plastic plant containers were used with a size of 14 cm x 14 cm x 12 cm. Said containers were filled with regular potting soil obtained from Culvita.

### Results

### Comparative Example A.

A container filled with soil as described in detail above was covered with a layer of the miscanthus as mentioned above, the layer having a thickness of approximately 2.5 cm.

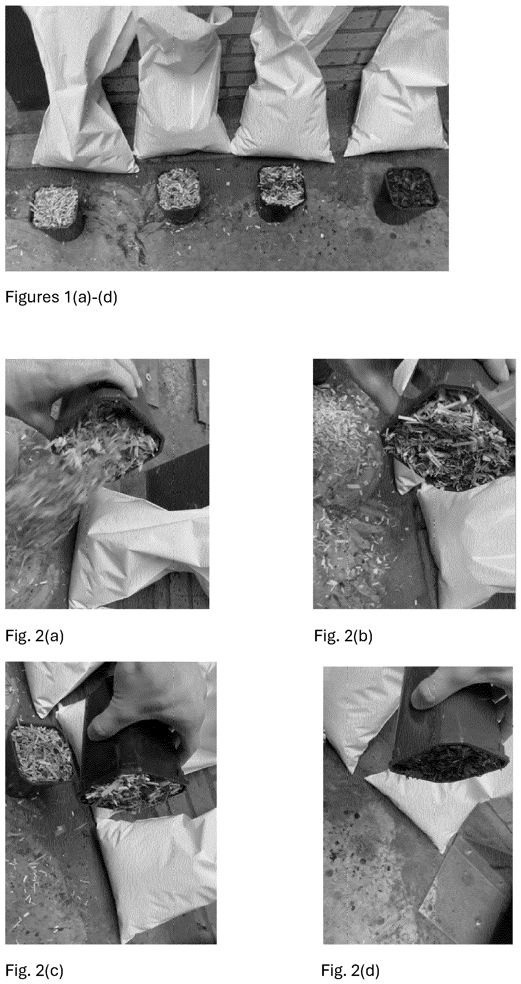

The miscanthus was slightly wetted by spraying tap water on top of the miscanthus layer, so that the miscanthus parts slightly adhered together. The container was stored for 24 hours at room temperature. Figure 1 shows a photo of said container (the container on the left, i.e. Fig. 1(a)). Subsequently, the container was held upside down to test the performance of the miscanthus layer. As can be seen in Figure 2(a), the majority of the miscanthus pieces immediately fall off.

### Example 1.

A mixture was prepared of miscanthus and the binder according to the invention. More particularly, 750 kg miscanthus was mixed with 250 kg of the thick fraction prepared as described above.

A container filled with soil as described in detail above was covered with a layer of this miscanthus/binder mixture, the layer having a thickness of approximately 2,5 cm.

The miscanthus mulch mixture was slightly wetted by spraying tap water on top of the miscanthus mixture. The container was stored for 24 hours at room temperature. Figure 1 shows a photo of said container (the second container from the left, i.e. Fig. 1(b)). Subsequently, the container was held upside down to test the performance of the miscanthus mixture according to the invention. As can be seen in Figure 2(b), the vast majority of the miscanthus pieces sticked to the soil and only a few miscanthus parts fell off.

### Example 2.

A mixture was prepared of miscanthus, bark, and a binder according to the invention. More particularly, 375 kg miscanthus was mixed with 375 kg bark and 250 kg of the thick fraction prepared as described above.

A container filled with soil as described in detail above was covered with a layer of this miscanthus/bark/binder mixture, the layer having a thickness of approximately 2,5 cm.

The miscanthus-bark mulch mixture was slightly wetted by spraying tap water on top of the mulch mixture. The container was stored for 24 hours at room temperature. Figure 1 shows a photo of said container (the second container from the right, i.e. Fig. 1(c)). Subsequently, the container was held upside down to test the performance of the miscanthus mixture according to the invention. As can be seen in Figure 2(c), the vast majority of the miscanthus and bark pieces sticked to the soil and only a few miscanthus and bark parts fell off.

### Example 3.

A mixture was prepared of bark and a binder according to the invention. More particularly, 750 kg bark and 250 kg of the thick fraction prepared as described above.

A container filled with soil as described in detail above was covered with a layer of this miscanthus/bark/binder mixture, the layer having a thickness of approximately 5 cm.

The bark mulch mixture was slightly wetted by spraying tap water on top of the mulch mixture. The container was stored for 24 hours at room temperature. Figure 1 shows a photo of said container (the container on the right, i.e. Fig. 1(d)). Subsequently, the container was held upside down to test the performance of the bark mulch mixture according to the invention. As can be seen in Figure 2(d), almost no bark pieces fell off.

These experiments are a clear indication that the mulch compositions according to the invention can resist being blown about in windy conditions or floating away in heavy rains.

### Example 4 and Comparative Example B.

For Comparative Example B, 7 containers with a small size conifer were filled with soil and were covered with a layer of the miscanthus as mentioned above, the layer having a thickness of approximately 3 cm. The miscanthus was treated with an aqueous iron oxide so that the final miscanthus mulch composition comprised the iron oxide in an amount of 3 wt%.

The miscanthus was slightly wetted by spraying tap water on top of the miscanthus layer, so that the miscanthus parts were slightly glued together. The containers were stored outside for 6 months (period April-September) in Boskoop, the Netherlands. After six months, the containers had lost on average around 20-30% of the miscanthus (i.e. around 20-30 % by weight of the miscanthus had been blown or washed away due to stormy weather conditions, observed visual inspection).

Compared with a blank (i.e. a container with soil and a small size conifer, without mulch), the reduction in weed growth was on average 80% (observed by weighing the weeds grown during these 6 months). The reduction in moss growth was on average 90% less, as compared to the blank (observed by weighing the moss grown during these 6 months).

For Example 4, a mixture was prepared of miscanthus and the binder according to the invention. More particularly, 780 kg miscanthus was mixed with 220 kg of the thick fraction prepared as described above. The mulch mixture was treated with an aqueous iron oxide so that the final mulch composition comprised the iron oxide in an amount of 3 wt%.

7 containers filled with soil and a small size conifer were covered with a layer of this miscanthus/binder mixture, the layer having a thickness of approximately 3 cm.

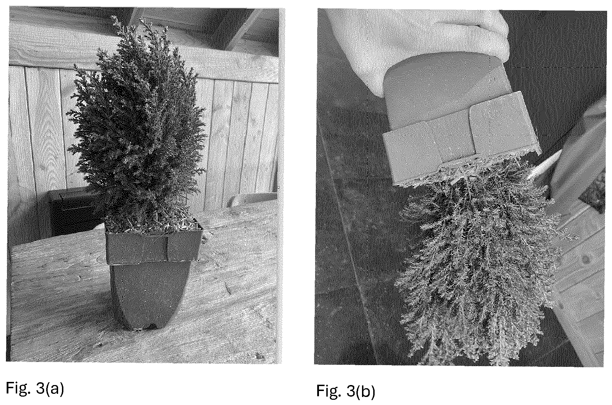

The miscanthus mulch mixtures were slightly wetted by spraying tap water on top of the miscanthus mixture. The containers were stored for 6 months outside. After six months, the containers had lost on average almost no and in any case less than 5% of miscanthus parts (observed via visual inspection). Figure 3 shows photos of an exemplary container, 6 months after applying the mulch mixture onto the soil: in Figure 3(a) the container with the conifer is shown, in Figure 3(b), the container was held upside down to test the performance of the miscanthus mixture according to the invention. As can be seen in Figure 3(b), the miscanthus pieces still sticked to the soil.

Compared with the blank (i.e. the container with soil and a small size conifer, without mulch), the reduction in weed growth was still on average 80% (observed by weighing the weeds grown during these 6 months). The reduction in moss growth was also still on average 90% less, as compared to the blank.

## Claims

1. A mulch composition comprising:
- at least 50 wt% of a fibrous material selected from the group consisting of parts of ornamental grass; shredded bark; wood chips; cocoa hulls; pumice stone; and mixtures thereof;
and
- between 10 and 50 wt% of a binder, in particular more than 20 wt% and less than 50wt%,
the binder being animal manure, in particular a thick fraction of animal manure,
with weight percentages being based on the total weight of the mulch composition.

2. Mulch composition according to claim 1, wherein the binder is a thick fraction of animal manure having a dry matter content of between 30 and 75 wt%, based on the total weight of said thick fraction.

3. Mulch composition according to claim 1 or claim 2, wherein the fibrous material comprises parts of ornamental grass, in particular chopped stems and leaves of said ornamental grass.

4. Much composition according to any of claims 1-3 wherein the ornamental grass is in particular an ornamental grass of the Poaceae family, and more in particular an ornamental grass selected from the group consisting of switch grass (*Panicum virgatum*) and *Miscanthus* species.

5. Mulch composition according to claim 4 wherein the *Miscanthus* species is selected from the group consisting of *Miscanthus sinensis, Miscanthus giganteus, Miscanthus sacchariflorus, Miscanthus tinctorius, Miscanthus transmorrisonensis.*

6. Mulch composition according to any of claims 1-5, further comprising an iron salt, preferably between 0.1 and 5 wt% of an iron salt, most preferably between 0.5 and 3.5 wt%, said iron salt in particular being iron oxide and/or iron sulphate, with weight percentages being based on the total weight of the mulch composition.

7. Mulch composition according to any of claims 1-6, wherein the binder is a sanitized thick fraction of animal manure, preferably wherein the binder is a thick fraction of animal manure which has been subjected to a pathogens reducing treatment, more preferably wherein the thick fraction of animal manure has been subjected to a pathogens reducing heat treatment at a temperature of at least 70°C for at least 60 minutes or to a comparable heat treatment.

8. Mulch composition according to any of claims 1-7, wherein the animal manure is selected from the group consisting of cattle manure, pig manure, horse manure, goat manure, sheep manure, and chicken manure.

9. Mulch composition according to claim 8, wherein the animal manure is cattle manure, in particular manure from cows.

10. A process for the preparation of a mulch composition according to any of claims 1-9, comprising
(a) providing a fibrous material selected from the group consisting of parts of ornamental grass; bark chips; wood chips; cocoa hulls; pumice stone; and mixtures thereof;
(b) providing a binder, said binder being animal manure, more particularly, a thick fraction of animal manure, preferably having a dry matter content of between 30 and 75 wt%, based on the total weight of said thick fraction; and
(c) mixing the fibrous material and the binder in such an amount that the resulting mulch composition comprises at least 50 wt% of the fibrous material and between 10 and 50 wt% of the binder, in particular more than 20 wt% and less than 50 wt%.

11. Process according to claim 10, wherein iron oxide is added during step (a), step (b), step (c), and/or in a subsequent step (d).

12. Process according to any of claims 10-11, wherein the binder is a sanitized thick fraction of animal manure, preferably wherein the binder is a thick fraction of animal manure which has been subjected to a pathogen reducing treatment, more preferably wherein the thick fraction of animal manure has been subjected to a pathogen reducing heat treatment at a temperature of at least 70°C for at least 60 minutes.

13. A process for suppressing weed growth, comprising applying a layer of a mulch composition according to any of claims 1-9 onto soil, more particularly wherein the layer is a layer with a thickness of 0.5-25 cm, even more in particular 1-20 cm, and most in particular 2-15 cm.

14. Use of the mulch composition according to any of claims 1-9 for suppressing weed growth, preventing plant diseases, inhibiting growth of parasitic fungi, protecting against heat, protecting against drought, protecting against frost and/or improving soil conditions by applying a layer thereof on soil more particularly wherein the layer is a layer with a thickness of 0.5-25 cm, even more in particular 1-20 cm, and most in particular 2-15 cm.

15. Use according to claim 14, wherein the mulch is applied to soil in a garden, a park, an orchard, a field, a nursery, a market garden, a farm, an orangery, on soil around a plant, bush, or tree; or on soil surrounding a plant, bush, or tree in a pot or container.

16. Use of animal manure, in particular a thick fraction of animal manure, as a binder for fibrous material suitable for use as mulch, wherein the fibrous material is selected from the group consisting of parts of ornamental grass; shredded bark; wood chips; pumice stone; cocoa hulls; and mixtures thereof.
